Europäisches Patentamt

(19) European Patent Office

Office européen des brevets

(11) **EP 1 017 622 B1**

(12) **EUROPEAN PATENT SPECIFICATION**

(45) Date of publication and mention
of the grant of the patent:
**21.07.2004 Bulletin 2004/30**

(51) Int Cl.[7]: **C01B 31/04**, C01B 31/02

(21) Application number: **98912834.3**

(22) Date of filing: **20.03.1998**

(86) International application number:
**PCT/NO1998/000093**

(87) International publication number:
**WO 1998/042621 (01.10.1998 Gazette 1998/39)**

(54) **MICRO-DOMAIN GRAPHITIC MATERIALS AND METHOD FOR PRODUCING THE SAME**

GRAPHITMATERIALIEN MIT MIKRODOMÄNEN UND VERFAHREN ZU DEREN HERSTELLUNG

MATERIAUX GRAPHITIQUES A MICRO-DOMAINES ET LEUR PROCEDE DE PRODUCTION

(84) Designated Contracting States:
**AT BE CH DE DK ES FI FR GB GR IE IT LI LU MC NL PT SE**

(30) Priority: **25.03.1997 NO 971413**

(43) Date of publication of application:
**12.07.2000 Bulletin 2000/28**

(73) Proprietor: **Kvaerner Technology and Research Limited**
**London SW1Y 6QY (GB)**

(72) Inventors:
• **LYNUM, Steinar**
**N-0284 Oslo (NO)**
• **HUGDAHL, Jan**
**N-7017 Trondheim (NO)**
• **HOX, Ketil**
**N-7021 Trondheim (NO)**
• **HILDRUM, Ragne**
**N-0874 Oslo (NO)**
• **NORDVIK, Magne**
**N-1475 Finnstadjordet (NO)**

(74) Representative: **Hayes, Adrian Chetwynd et al**
**Boult Wade Tennant,**
**Verulam Gardens**
**70 Gray's Inn Road**
**London WC1X 8BT (GB)**

(56) References cited:
WO-A-93/20152          WO-A-93/23331
WO-A-94/17908          WO-A-95/26925

• **MATERIALS RESEARCH SOCIETY SYMPOSIUM PROCEEDINGS, Volume 359, December 1994, PATRICK BERNIER et al., "Science and Technology of Fullerene Materials".**
• **INST. PHYS. CONF., No. 138, 1993, R. VINCENT et al., "Three-Dimensional Morphology and Microstructure of Graphite Shells".**
• **CHEMICAL PHYSICS LETTERS, Volume 220, April 1994, MAOHUI GE et al., "Observation of Fullerene Cones", pages 192-196.**

**Description**

FIELD OF INVENTION

This invention relates to a method for producing micro-domain graphitic materials by use of a plasma process, and for producing novel micro-conical graphitic materials. By micro-domain graphitic materials we mean fullerenes, carbon nanotubes, open conical carbon structures (also named micro-cones), preferably flat graphitic sheets, or a mixture of two or all of these. The novel carbon material is open carbon micro-cones with total disclination degrees 60° and/or 120°, corresponding to cone angles of respectively 112.9° and/or 83.6°.

BACKGROUND OF THE INVENTION

There is currently an intense interest in novel carbon materials due to their unique and novel properties. For instance, the carbon materials may be useful to achieve high hydrogen energy storage, for use in purification processes as well as for different applications within the electronical/pharmaceutical sector. The properties are sensitive to the micro-structure of the carbon material, which can be varied by the degree of graphitisation and by introduction of rings other than hexagons in the network. Fullerenes are examples of novel graphitic structures where the introduction of 12 pentagons in the hexagonal network results in closed shells [1]. Carbon nanotubes is also an example of such possibilities [2]. Open conical structures are yet another example of possible graphitic structures, but only three of five possible kinds have ever been synthesised [3, 4, 5].

Recent interest in fullerenes and nanotubes is amongst other connected to their use in the field of hydrogen storage. Hence, for nanotubes a hydrogen storage of amazingly 75wt% is reported [6]. If this is the case, it will probably represent the break-through concerning a practical hydrogen storage system for use in the transportation sector. It is indicated that future fuel cell cars using this storage technology may achieve a range of about 8000 km.

In the case of fullerenes, more than 7wt% of reversibly added hydrogen is achieved [7, 8, 9]. Fullerenes has also been used in a solid phase mixture with inter-metallic compounds or metals to achieve high contents of hydrogen, i.e. 24-26 H atoms per fullerene molecule [10].
Flat graphitic material formed of stacks of two-dimensional sheets has high surface area for adsorption of guest elements and compounds. However, in such materials the adsorption process is limited by diffusion. The larger the graphitic domain, the slower the adsorption will be. Of potential interest would be highly graphitised materials where domains were small so that the guest material would readily reach all the graphitic micro domains by percolation through the bulk carbon material. The accessibility to the micro-domains could be further enhanced if some or all the domains had topological disclination, preferably each domain having less or equal than 300° disclination to provide cavities, or micropores, for the flow of guest material.

A common problem with the present methods for synthesising these graphitic materials is the low production yield. The fullerenes are most often synthesised by vaporising graphite electrodes via carbon-arc discharges in a reduced inert gas atmosphere. There has been reported a conversion rate into fullerenes of 10-15%, corresponding to a generation rate of nearly 10 grams per hour [11].

The carbon-arc method is also the most frequently used method for production of carbon nanotubes. Nanotubes yields of about 60% of the core material has been obtained at optimal conditions [2]. Still, the achieved yield is in gram quantities.

Small unspecified amounts of open conical carbon structures are obtained by resistively heating a carbon foil and further condensing the carbon vapour on a highly-oriented pyrolytic graphite surface [3, 4]. The cone angles produced by this method was approximately 19° [3], and 19° as well as 60° [4]. Resistive heating of a carbon rod, with further deposition on cooler surfaces was used to produce cones with apparent cone angles of approximately 39° [5]. It can be shown from a continuos sheet of graphite that only five types of cones can be assembled, where each domain is uniquely defined by its topological disclination TD given by the general formula:

$$TD = N \times 60 \text{ degrees},$$

where N =0, 1, 2, 3, 4 or 5,

The structure of such graphitic domains can be grossly described as stacks of graphitic sheets with flat (N = 0) or conical structures (N = 1 to 5). Hence, two of these, holding cone angles of 83.6° and 112.9°, has not been reported so far.

SUMMARY OF THE INVENTION

An object of this invention is to provide a novel method as defined in claim 1 for producing micro-domain graphitised materials. The method can give large yield rates, up to above 90%.

Another object of this invention is to provide a method as defined in claim 1 that is suited for industrial scale production of micro-domain graphitised materials.

Further, it is an object of this invention to provide a method that can produce a micro-domain graphitised materials which at least partly consists of a novel highly crystalline graphitic material composed of open conical carbon structures holding cone angles of 83.6° and 112.9°. This corresponds to N = 1 and 2. The rest of the micro-conical graphitised materials are either fullerenes, carbon nanotubes, the other open carbon cones (N = 3, 4, or 5), preferably flat graphitic sheets (N = 0), or a mixture of two or more of these.

BRIEF DESCRIPTION OF THE FIGURES

FIG. 1 shows a schematic figure of the reactor and the surrounding equipment.

FIG. 2 shows a transmission electron microscope photograph of the samples revealing the various types of open micro-conical carbons of the invention.

FIG. 3 shows the projected angles for perfect graphitic cones, i.e. 19.2°. 38.9°, 60°, 83.6° and 112.9°, which represents total disclination of 300°, 240°, 180°, 120° and 60°, respectively. In addition a graphitic sheet, having a projected angle of 180° and a total disclination of 0°, is shown.

FIG. 4A, 4B, 4C, 4D and 4E shows example of domains for each type of disclination 60°, 120°, 180°, 240° and 300°, respectively, present in the invention.

DETAILED DESCRIPTION OF THE INVENTION

The invention is based upon decomposition of hydrocarbons into carbon and hydrogen in a plasma based process. The plasma arc is formed in a plasma generator which consists of tubular electrodes, wherein the inner electrode is supplied with electrical direct voltage with one polarity and wherein the external electrode is connected to the opposite polarity from a power supply. The plasma generator is installed in connection with a decomposition reactor wherein the reactor is designed as a defined heat insulated chamber with an outlet for end products. The plasma gas is recycled from the process. Further description of the general process and the equipment is described in the applicant's Norwegian patent NO 176522.

The structure of the resulting carbon material will depend on the following three process parameters: The hydrocarbon feed rate, the plasma gas enthalpy and the residence time. By varying these parameters the resulting carbon material will either be available as conventional carbon black, as micro-domain graphitic materials or a mixture of both. In this invention we will describe the process parameters for optimising on micro-domain graphitic materials.

The hydrocarbons are introduced into the decomposition reactor in the vicinity of the plasma arc zone by use of a self-invented nozzle which is aligning the hydrocarbon spray in the axial direction of the reactor, and is designed in such a way that coarse drops are formed. This is to delay the hydrocarbon evaporation and by this optimise on the formation of micro-domain graphitic material, as further explained below.

Energy is supplied from the plasma arc to heat the plasma gas. Some of the energy from the arc will be used to heat the surrounding reactor walls as well as the plasma generator itself. The resulting energy content of the plasma gas (the plasma gas enthalpy) is sufficient to evaporate the hydrocarbons. The hydrocarbons starts a cracking and polymerisation process, which results in the formation of polycyclic aromatic hydrocarbons (PAHs). The PAHs are the basis of graphitic sheets forming the micro-domains. The plasma gas enthalpy is kept at such a level that the main fraction of the gaseous hydrocarbons does not reach pyrolysis temperatures at the specified feed rate and residence time used. However, a small fraction of the feedstock will inevitably achieve sufficient energy during the residence time in the reactor to reach pyrolysis temperature and is consequently converted to conventional carbon black. This fraction should be kept as low as possible.

The PAHs leaves the reactor along with the plasma gas and is once more introduced in the reactor as a part of the plasma gas. The plasma gas enters the energy intensive plasma arc zone, wherein the PAHs during a fraction of a second are converted to graphitic micro-domains.

The feedstock feed rate for optimising on graphitic micro-domain materials is in the range of 50-150 kg/h in a reactor employed by the inventor, but is not limited by this range. Both lower and higher feedstock feed rates might be used. The yield of the graphitic micro-domain material is better than 90% under optimal conditions. At least 10 percent of these domains have total disclinations larger than 60°. Taken into account the feedstock feed rate utilised, industrial amounts of micro-domain carbon material is achieved. By further up-scaling this will result in a price which is on the same level as commercial carbon black per unit weight of the material.

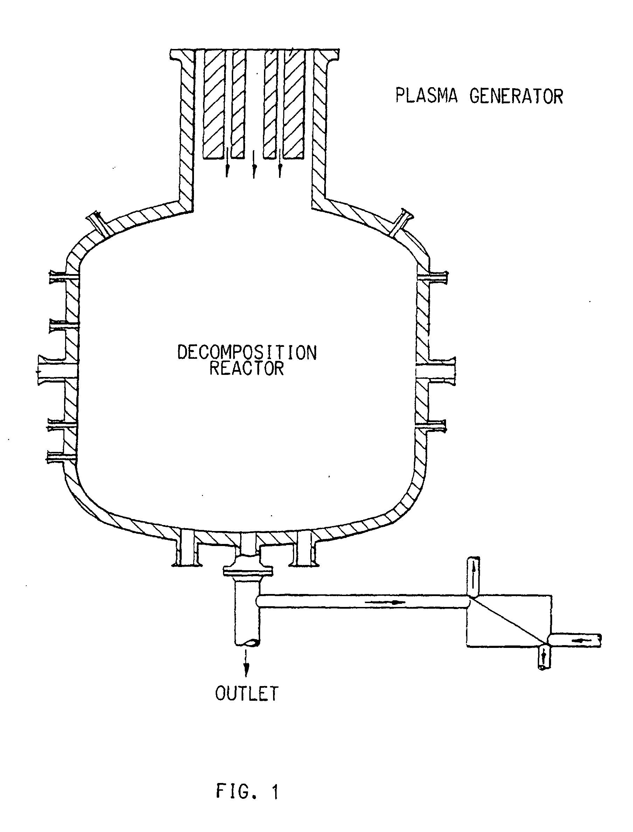

Fig. 1 shows a schematic drawing of the reactor. Further details concerning the reactor and the surrounding equipment is described in the applicant's Norwegian patent NO 176511.

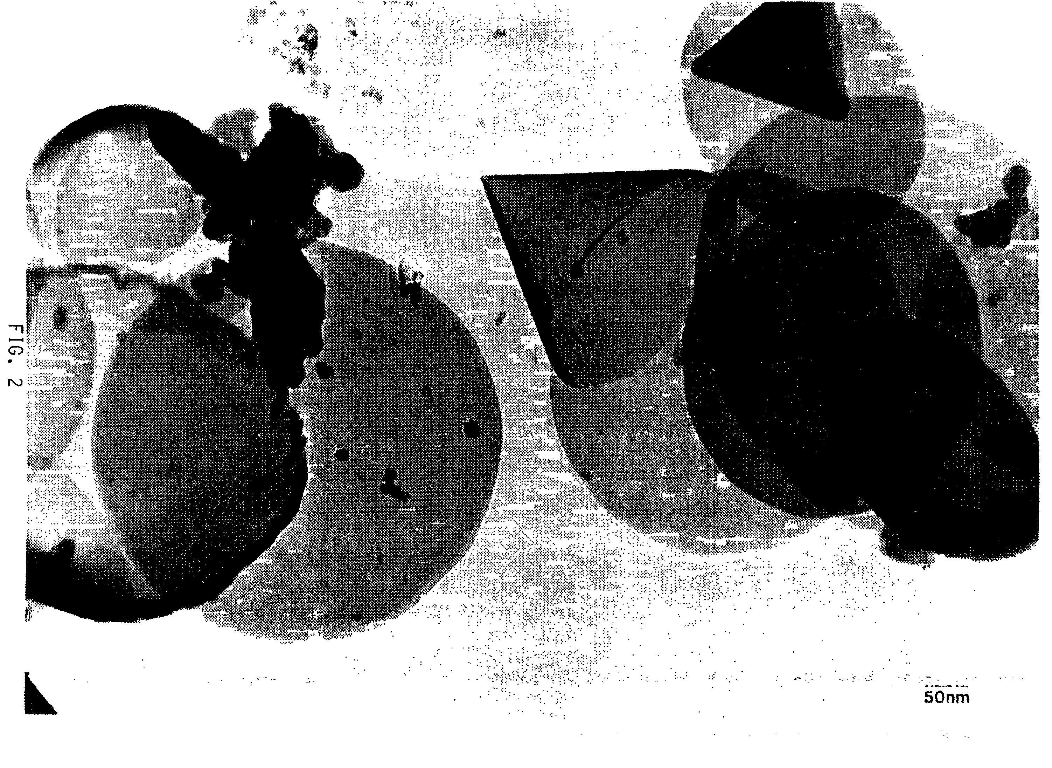

Fig. 2 shows a typical example of the content of the micro-domain material. Each piece in the sample forms a single graphitic domain and the alignment of the sheets in each domain is typically turbostratic, as determined from electron microscopy. The diameter of the domains is typically less than 5 micrometers and the thickness less than 100 nanometers.

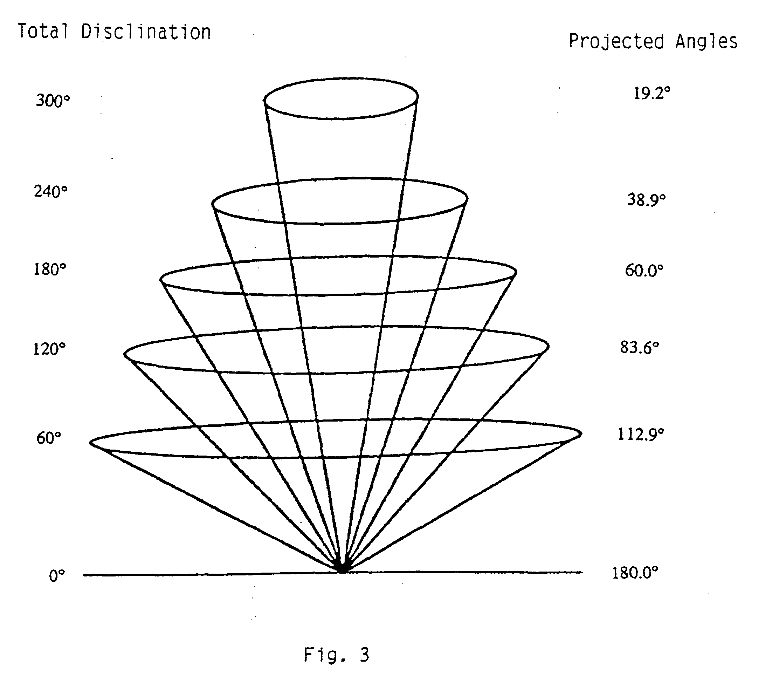

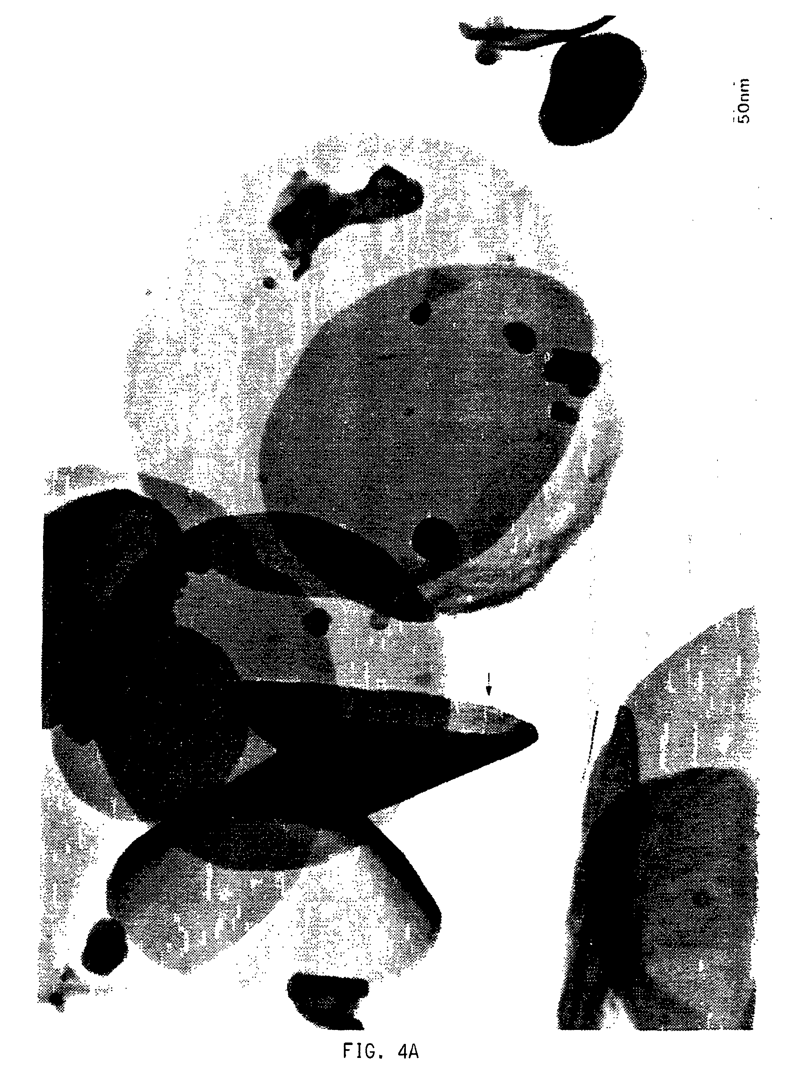

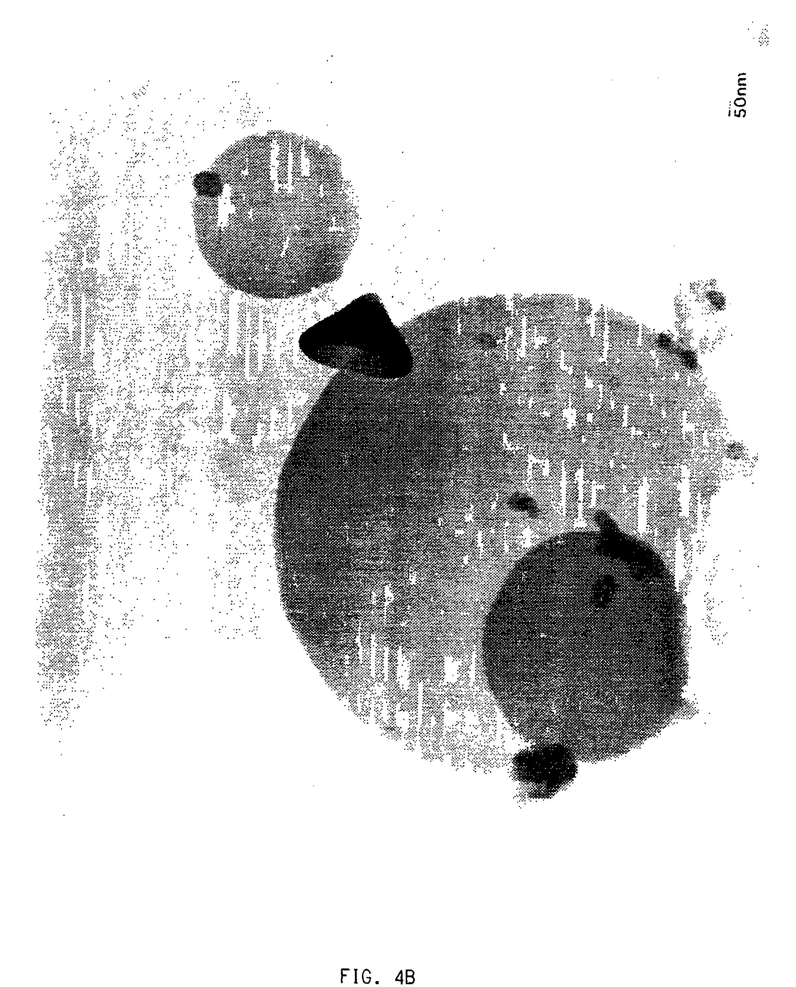

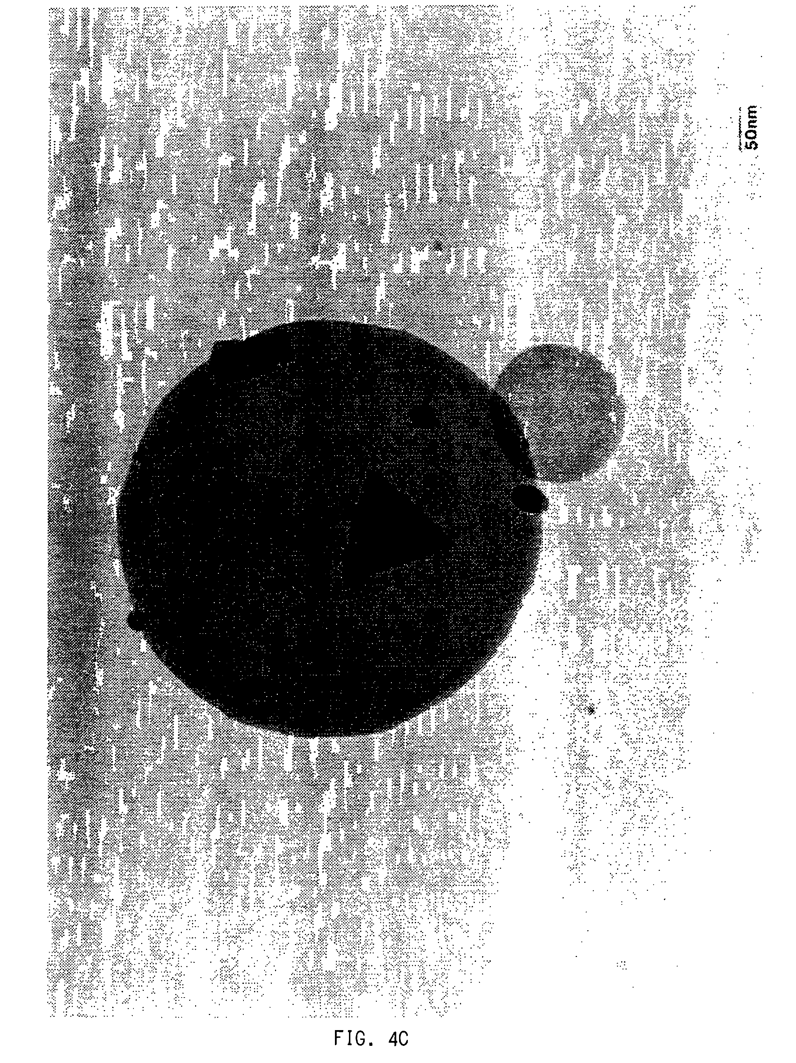

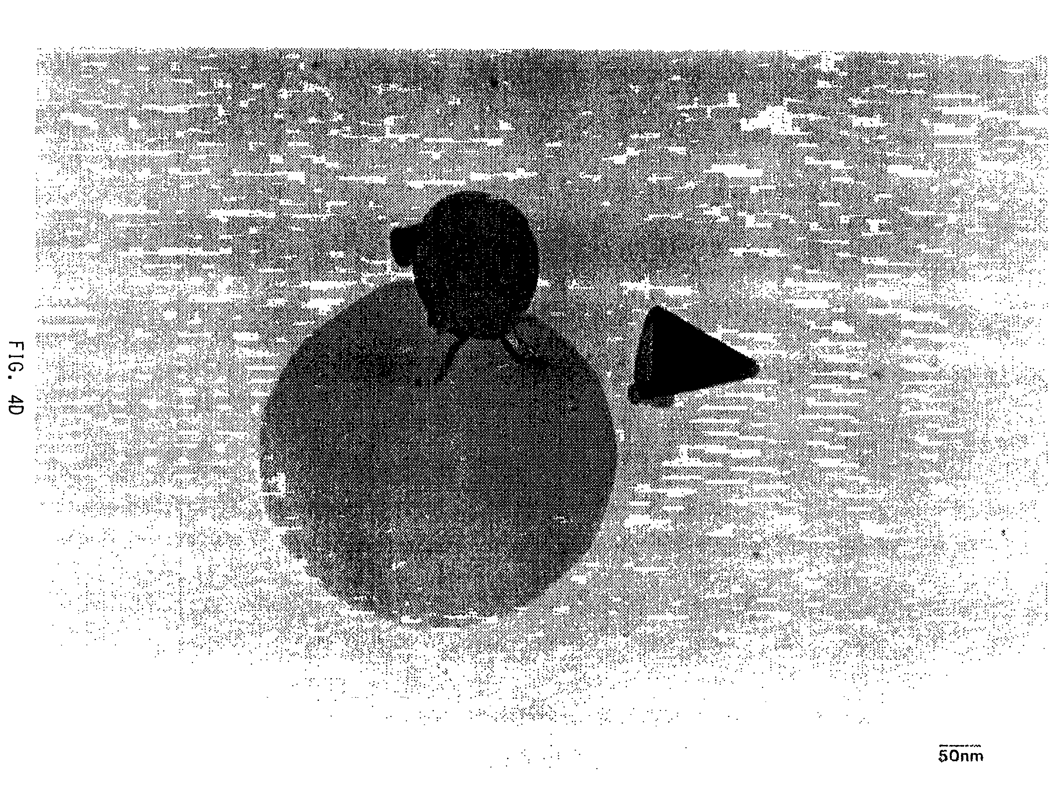

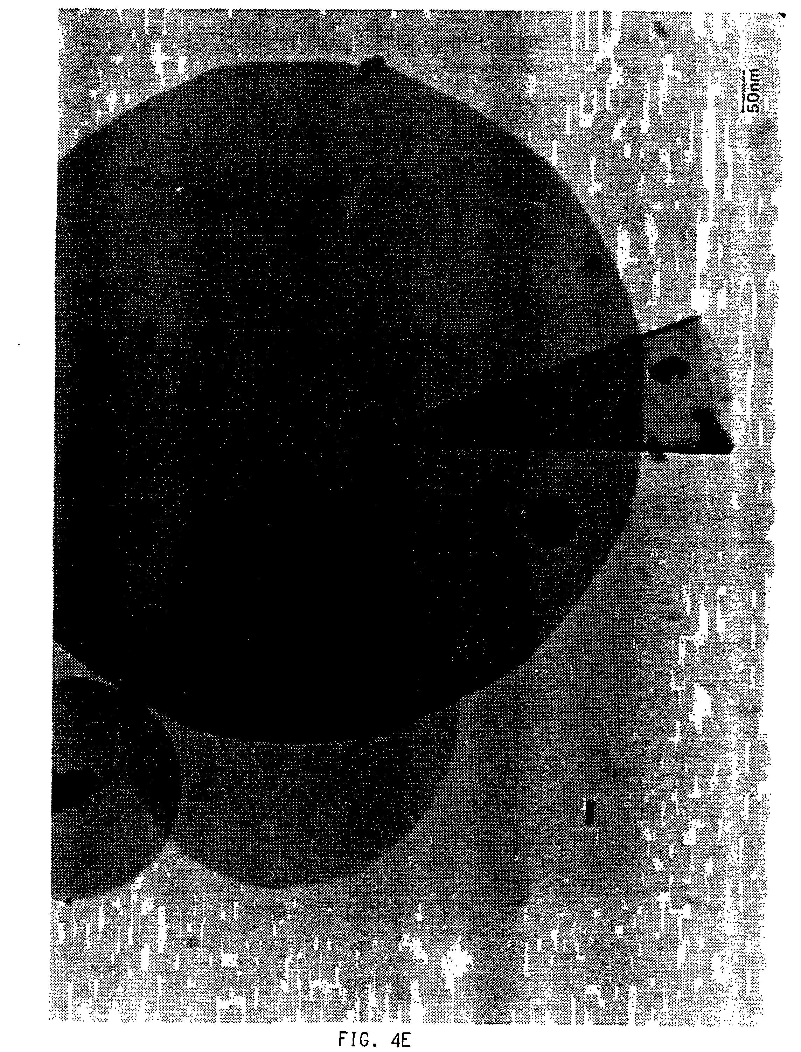

If a cone is made up of an uninterrupted sheet of graphite, except at the open edge, the only five possible types are possible due to the symmetry of graphite. These corresponds to a total disclination of 60°, 120°, 180°, 240° and 300°. A total disclination of 0° corresponds to a flat domain. Fig. 3 shows schematically the projected angles of these structures. Examples of each of these types of domains are shown in Fig. 4A, 4B, 4C, 4D and 4E. It is important to notice that all the cones are closed in the apex. The conical domains represents at least 10% of the material. The material of this invention consist of micro-domains of graphite of well-defined total disclinations TD (curvature), which have discrete values given by the formula

$$TD = N \times 60 \text{ degrees},$$

where N =0, 1, 2, 3, 4 or 5,
and corresponds to the effective number of pentagons necessary to produce the particular total disclination.

The results the process is based on indicates that the total disclination nearly always is determined in the nucleation stage. It is earlier found that the probability of forming pentagons in the seed depends on the temperature [12]. Hence, by varying the process parameters, including but not limited to increasing the reaction temperature, the number of pentagons in the seed may increase, resulting in formation on nanotubes or closed shells.

The small size of the domains and the presence of various disclinations in the graphitic material produced in the present invention are useful for the incorporation of guest elements and compounds. The space between the domains will provide micro-pores for the flow of guest material so that it can reach each domain. The small size of the domains will allow rapid diffusion of guest material in and out of each layer composing them.

The invention will be illustrated in more detail with reference to the following examples, which should not be construed to be limiting in scope of the present invention. In Example 1, the process parameters are chosen in such a way that conventional carbon black is formed at the first (and only) cycle of hydrocarbons through the reactor. By varying the feedstock feed rate, the plasma gas enthalpy and the residence time, it is shown in Example 2 that at the second cycle through the reactor, micro-domain graphitic materials can be produced from PAHs formed in the first cycle.

EXAMPLE 1

Heavy fuel oil was heated to 160°C and introduced in the reactor by use of the self-invented axial aligned nozzle at a feed rate of 67 kg per hour. The reactor pressure was kept at 2 bar. Hydrogen was employed as plasma gas, and the plasma gas feed rate was $350Nm^3$/h, while the gross power supply from the plasma generator was 620 kW. This resulted in a plasma gas enthalpy of 1.8 kWh/Nm3 $H_2$. The time elapsed from the atomised oil was introduced until the product left the reactor was approximately 0.23 seconds.

The resulting carbon black was traditional amorphous of N-7xx quality. The volatile content of the carbon black was measured to 0.6%.

EXAMPLE 2

In this example the oil feed rate, the hydrogen plasma gas enthalpy as well as the residence time was tuned in such a direction that the evaporated hydrocarbons did not achieve pyrolysis temperature during the first cycle. The residence time of the hydrocarbons during the first cycle through the reactor was minimised by increasing the oil and plasma gas feed rate.

Heavy fuel oil was heated to 160°C and introduced in the reactor by use of the self-invented axial aligned nozzle at a feed rate of 115 kg per hour. The reactor pressure was kept at 2 bar. The hydrogen plasma gas feed rate was $450Nm^3$/h, while the gross power of supply from the plasma generator was 1005 kW. This resulted in plasma gas enthalpy of 2.2 kWh/Nm3 $H_2$. The time elapsed from the oil was introduced until the PAHs left the reactor was approximately 0.16 seconds.

The resulting PAHs were reintroduced into the reactor in the plasma-arc zone to produce a micro-domain graphitic material, with a yield higher than 90%. The volatile content of the carbon material was measured to 0.7%. All other process parameters were the same as for the first cycle.

Although in the example of the method has been described as a conversion of heavy oil to a micro-domain graphitic material, it should be understood that the method can be applied for all hydrocarbons, both liquid and gaseous. Also, the method may be performed as a batch or continuous production, with one or more plasma reactors in series etc. In the case where the PAHs formed in the first decomposition step is reintroduced into the same plasma reactor, the micro-domain graphitic materials formed in the second decomposition step are of course separated from the PAHs by any conventional suited means. This may be by filtering, cyclones etc.

Further, any gas that is inert and do not pollute the micro-domain graphitic products may be used as plasma gas, but hydrogen is specially suited since this element is present in the feedstock. The plasma gas may be recycled back into the reactor, if desired. It is also possible to employ the present method by introducing additional hydrocarbons through inlets at the sides of the decomposition reactor to control the temperature in the decomposition zone and/or to increase the yield, see the applicant's Norwegian patent NO 176522.

REFERENCES

1. D. Huffman, Physics Today, p. 22, 1991.
2. T.W. Ebbesen, Physics Today, p. 26, 1996.
3. M. Ge and K. Sattler, Chemical Physics Letters 220, p. 192, 1994.
4. P. Li and K. Sattler, Mat. Res. Soc. Symp. Proc. 359, p. 87, 1995.

5. R. Vincent, N. Burton, P.M. Lister and J.D. Wright, Inst. Phys, Conf. Ser.. 138, p. 83, 1993.

6. Hydrogen & Fuel Cell Letter, vol. 7/No. 2, Feb. 1997.

7. R.M. Baum, Chem. Eng. News, 22, p. 8, 1993.

8. Japanese Patent JP 27801 A2, Fullerene- based hydrogen storage media, 18th August 1994.

9. A. Hirsch, Chemistry of Fullerenes, Thieme Ferlag, Stuttgart, Ch. 5, p. 117, 1994.

10. B.P. Tarasov, V.N. Fokin, A.P. Moravsky, Y.M. Shul'ga, V.A. Yartys, Journal of Alloys ans Compounds 153-254, p. 25, 1997.

11. R.E Haufler, Y. Chai, L.P.F.m, Chibante, J. Conceico, C. Jin, L-S Wang, S. Maruyama, R.E. Smalley, Mat. Res. Soc. Symp. Proc. 206, p. 627, 1991

12. M. Endo and H.W. Kroto. J. Phys. Chem. 96, p. 6941, 1992.

## Claims

1. A method for the production of micro-domain graphitic materials by decomposition of a hydrocarbon fuel in a plasma reactor comprising a decomposition chamber connected to a plasma generator, wherein the plasma reactor is fed with $H_2$ as the plasma forming gas, **characterised in that** the hydrocarbon fuel is decomposed in a two step process wherein the hydrocarbons are subjected to a first decomposition step, wherein the hydrocarbon fuel is fed into the decomposition chamber in the vicinity of the plasma arc zone and mixed with the plasma gas, and wherein the process parameters are adjusted in such a manner that the hydrocarbons do not reach pyrolysis temperature and are only partially decomposed to form polycyclic aromatic hydrocarbons (PAHs), and wherein the hydrocarbons in the form of PAHs, after the first decomposition step, are mixed with the plasma gas and reintroduced as a part of the plasma gas into the plasma arc zone in the decomposition chamber and subjected to a second decomposition step, wherein the process parameters are adjusted in such a manner that the intense heat in the plasma arc zone causes the PAHs to be fully converted into micro-domain graphitic materials.

2. A method according to claim 1, **characterised in that** the reaction chamber connected to a plasma generator is made of a decomposition chamber constructed as a defined insulated chamber with outlet for the end products which is connected to a plasma torch in the other end.

3. A method according to claim 1, **characterised in that** the micro-domain graphitic materials consist of at least one of the materials chosen from the group comprising carbon nanotubes, fullerenes, carbon micro-cones, and flat graphitic carbon sheets.

4. A method according to claim 3, **characterised in that** the domain size is smaller than 5 μm in diameter or length parallel to the graphitic stacking direction and having a thickness of less than 100 nm in the graphitic stacking direction.

5. A method according to claim 1, **characterised in that** the conversion rate of hydrocarbons into micro-domain graphitic materials is in the range from 0 to above 90%.

6. A method according to claim 1, **characterised in that** the conversion rate of hydrocarbons into micro-domain graphitic materials is above 90%.

7. A method according to claim 1, **characterised in that** the conversion rate of hydrocarbons into micro-domain graphitic materials is in an industrial range, that is above 50 kg/hour, preferably above 100 kg/hour and most preferably above 150 kg/hour.

8. A method according to any one of claims 1-7, **characterised in that** at least 10% of the produced microdomain graphitic materials consist of open carbon micro-cones with total disclination larger than 60°.

9. A method according to any one of claims 1-8, **characterised in that** the method employs heavy fuel oil as hydrocarbon feed for conversion into micro-domain graphitic materials.

10. A carbon material comprising micro-domain graphitic materials, **characterised in that** it contains open carbon micro-cones with total disclination degrees 60° and/or 120°, corresponding to cone angles of respectively 112.9° and/or 83.6°.

## Patentansprüche

1. Ein Verfahren zur Herstellung von im Mikrobereich graphitischen Materialien durch Zersetzung eines Kohlenwasserstoff-Brennstoffes in einem Plasmareaktor umfassend eine Zersetzungskammer, die mit einem Plasmagenerator verbunden ist, wobei dem Plasmagenerator $H_2$ als plasmabildendes Gas zugeführt wird, **dadurch gekennzeichnet, daß** der Kohlenwasserstoff-Brennstoff in einem zweistufigen Prozeß zersetzt wird, wobei die Kohlenwasserstoffe einem ersten Zersetzungsschritt unterworfen werden, in dem der Kohlenwasserstoff-Brennstoff der Zersetzungskammer in der Nähe der Plasmabogenzone zugeführt und mit dem Plasmagas gemischt wird und wobei die Prozeßparameter in solcher Weise eingestellt werden, daß die Kohlenwasserstoffe nicht die Pyrolysetemperatur erreichen und nur teilweise zersetzt werden, um polyzyklische aromatische Kohlenwasserstoffe (PAHs) zu bilden, und wobei die Kohlenwasserstoffe in der Form der PAHs nach dem ersten Zersetzungsschritt mit dem Plasmagas gemischt und wieder als ein Teil des Plasmagases in die Plasmabogenzone in der Zersetzungskammer eingeführt und einem zweiten Zersetzungsschritt unterworfen werden, in dem die Prozeßparameter in solcher Weise eingestellt werden, daß die starke Wärme in der Plasmabogenzone die PAHs dazu bringt, daß sie völlig in im Mikrobereich graphitische Materialien umgewandelt werden.

2. Ein Verfahren nach Anspruch 1, **dadurch gekennzeichnet, daß** die mit einem Plasmagenerator verbundene Reaktionskammer aus einer Zersetzungskammer erstellt ist, die als definierte isolierte Kammer mit Auslaß für die Enderzeugnisse aufgebaut ist, der mit einer Plasmafackel im anderen Ende verbunden ist.

3. Ein Verfahren nach Anspruch 1, **dadurch gekennzeichnet, daß** die im Mikrobereich graphitischen Materialien aus wenigstens einem der Materialien bestehen, die ausgewählt sind aus der Gruppe der Kohlenstoff-Nanoröhren, Fullerene, Kohlenstoff-Mikrokonen und ebenen graphitischen Kohlenstoffblätter.

4. Ein Verfahren nach Anspruch 3, **dadurch gekennzeichnet, daß** die Bereichsgröße kleiner als 5 µm im Durchmesser oder in der Länge parallel zur graphitischen Stapelrichtung ist und eine Stärke von weniger als 100 nm in der graphitischen Stapelrichtung hat.

5. Ein Verfahren nach Anspruch 1, **dadurch gekennzeichnet, daß** die Umwandlungsrate der Kohlenwasserstoffe in Mikrobereich-graphitische Materialien im Bereich von 0 bis über 90 % liegt.

6. Ein Verfahren nach Anspruch 1, **dadurch gekennzeichnet, daß** die Umwandlungsrate der Kohlenwasserstoffe in Mikrobereich-graphitische Materialien über 90 % ist.

7. Ein Verfahren nach Anspruch 1, **dadurch gekennzeichnet, daß** die Umwandlungsrate der Kohlenwasserstoffe in Mikrobereich-graphitische Materialien in einem industriellen Bereich liegt, der über 50 kg/Stunde, vorzugsweise über 100 kg/Stunde und am bevorzugsten über 150 kg/Stunde liegt.

8. Ein Verfahren nach einer der Ansprüche 1 bis 7, **dadurch gekennzeichnet, daß** wenigstens 10 % der erzeugten Mikrobereich-graphitischen Materialien aus offenen Kohlenstoff-Mikrokonen mit einer Gesamtdisklination größer als 60° bestehen.

9. Ein Verfahren nach einem der Ansprüche 1 bis 8, **dadurch gekennzeichnet, daß** bei dem Verfahren schweres Brennstofföl als Kohlenwasserstoffversorgung für eine Umwandlung in Mikrobereich-graphitische Materialien verwendet wird.

10. Ein Kohlenstoffmaterial umfassend Mikrobereich-graphitische Materialien, **dadurch gekennzeichnet, daß** es offene Mikrokonen mit Totaldisklinationsgraden bzw. -winkeln von 60° und/oder 120° entsprechend Konuswinkeln von respektive 112,9° und/oder 83,6° enthält.

## Revendications

1. Un procédé de production de matériaux graphitiques micro-domaine par décomposition d'un carburant hydrocarboné dans un réacteur à plasma comprenant une chambre de décomposition connectée à un générateur de plasma dans lequel le réacteur à plasma est alimenté avec de l'hydrogène comme un gaz formant le plasma, **caractérisé en ce que** le carburant hydrocarboné est décomposé dans un procédé en deux étapes dans lequel les hydrocarbones sont soumis à une première étape de décomposition, dans laquelle le carburant hydrocarboné est injecté dans la chambre de décomposition au voisinage de la zone de l'arc à plasma et mélangé au gaz plasma et dans laquelle les paramètres du procédé sont ajustés de telle manière que les hydrocarbures n'atteignaient pas la température de pyrolyse et sont seulement partiellement décomposés pour former des hydrocarbures aromatiques polycycliques (PAHs) et dans lequel les hydrocarbures sous la forme de PAHs après la première étape de décomposition sont mélangés avec le gaz plasma et réintroduits comme une part du gaz plasma dans la zone de l'arc à plasma dans la chambre de décomposition et soumis à une seconde étape de décomposition dans laquelle les paramètres du procédé sont ajustés de telle manière que la chaleur intense dans la zone de l'arc à plasma provoque la conversion complète des PAHs en matériaux graphitiques micro-domaine.

2. Un procédé selon la revendication 1, **caractérisé en ce que** la chambre de réaction connectée au générateur à plasma est formée d'une chambre de décomposition agencée comme une chambre d'isolation définie avec une évacuation pour les produits finaux qui est connectée à la torche à plasma à l'autre extrémité.

**3.** Un procédé selon la revendication 1, **caractérisé en ce que** les matériaux graphitiques micro-domaine sont constitués de l'un au moins des matériaux choisis dans le groupe comprenant les nano-tubes de carbone, les fullerènes, les micro-cônes de carbone et les feuilles de carbone graphitique plates.

**4.** Un procédé selon la revendication 3, **caractérisé en ce que** la taille du domaine est inférieure à 5 $\mu$m en diamètre ou en longueur parallèle à la direction de l'empilage graphitique ayant une épaisseur de moins de 100 nm dans la direction d'empilage graphitique.

**5.** Un procédé selon la revendication 1, **caractérisé en ce que** le taux de conversion des hydrocarbures en matériaux graphitiques micro-domaine est compris dans une gamme de 0 à plus de 90 %.

**6.** Un procédé selon la revendication 1, **caractérisé en ce que** le taux de conversion des hydrocarbures en matériaux graphitiques micro-domaine est supérieur à 90 %.

**7.** Un procédé selon la revendication 1, **caractérisé en ce que** le taux de conversion des hydrocarbures en matériaux graphitiques micro-domaine est dans une gamme industrielle qui est au-dessus de 50 kg/heure de préférence au dessus de 100 kg/heure et encore plus préférablement au-dessus de 150 kg/heures.

**8.** Un procédé selon l'une quelconque des revendications 1 à 7, **caractérisé en ce que** au moins 10 % de matériaux graphitiques micro-domaine contiennent des micro-cônes carbonés ouverts avec un degré de désinclinaison total supérieur à 60°.

**9.** Un procédé selon l'une quelconque des revendications 1 à 8, **caractérisé en ce que** le procédé utilise du fioul lourd comme hydrocarbure pour alimenter leur conversion en matériaux graphitiques micro-domaine

**10.** Un matériau carboné comprenant des matériaux graphitiques micro-domaine, **caractérisé en ce qu'**ils contiennent des micro-cônes carbonés ouverts avec un degré de désinclinaison total de 60°et/ou 120°, correspondant à des angles cônes de respectivement 112,9° et/ou 83,6°.

PLASMA GENERATOR

DECOMPOSITION
REACTOR

OUTLET

FIG. 1

50nm

FIG. 2

Fig. 3

50nm

FIG. 4A

FIG. 4B

FIG. 4C

50nm

FIG. 4D

FIG. 4E